**Europäisches Patentamt**

**European Patent Office**

**Office européen des brevets**

(11) Veröffentlichungsnummer: **0 321 731**
**A2**

(12) **EUROPÄISCHE PATENTANMELDUNG**

(21) Anmeldenummer: **88119736.2**

(22) Anmeldetag: **26.11.88**

(51) Int. Cl.4: **C08J 11/08 , C08L 25/00 , C09J 3/14**

(30) Priorität: **10.12.87 DE 3741777**

(43) Veröffentlichungstag der Anmeldung:
**28.06.89 Patentblatt 89/26**

(84) Benannte Vertragsstaaten:
**AT BE CH DE ES FR GB GR IT LI LU NL SE**

(71) Anmelder: **Gloistein, Klaus**
**Am roten Mäuerle 3**
**D-7530 Pforzheim-Eutingen(DE)**

(72) Erfinder: **Gloistein, Klaus**
**Am roten Mäuerle 3**
**D-7530 Pforzheim-Eutingen(DE)**

(74) Vertreter: **Witte, Alexander, Dr.-Ing. et al**
**Schickhardtstrasse 24**
**D-7000 Stuttgart 1(DE)**

(54) **Verfahren zur Aufbereitung von Kunststoffabfällen auf Polystyrolbasis und deren Weiterverwertung.**

(57) Bei einem Verfahren zur Aufbereitung von Kunststoffabfällen auf Polystyrolbasis werden die Kunststoffabfälle durch Behandeln mit einem Lösungsmittel in eine Lösung übergeführt. Dadurch können voluminöse und sperrige Kunststoffabfälle in eine raumsparende Form übergeführt werden. Die dadurch entstehende Lösung zeigt Klebeeigenschaften und kann als Alleskleber verwendet werden. Durch Entfernen des Lösungsmittels von der Lösung kann das Kunststoffmaterial in kompakter Form zurückgewonnen werden und in ein wieder verwendbares Granulat übergeführt werden.

EP 0 321 731 A2

## Verfahren zur Aufbereitung von Kunststoffabfällen auf Polystyrolbasis und deren Weiterverwertung

Die Erfindung betrifft ein Verfahren zur Aufbereitung von Kunststoffabfällen auf Polystyrolbasis und die Weiterverwertung der Kunststoffe.

Kunststoffe haben im täglichen Leben einen verbreiteten Einsatz gefunden. Neben dem Ersatz von klassischen Materialien, wie Holz oder Metall in Geräten, Möbeln oder dgl., haben die Kunststoffe eine breite Verwendung als Verpackungs- oder Behältnismaterialien gefunden.

Aufgrund dieses breiten Anwendungsbereiches für Kunststoffe, ist deren Anteil im anfallenden und zu beseitigenden Abfall ständig angestiegen. Dieser Anteil wurde insbesondere dadurch erhöht, daß es üblich geworden ist, Lebensmittel für den täglichen Bedarf in Kunststoffverpackungen bzw. -behältern anzubieten. Sowohl im Haushalts- als auch im industriellen Bereich fallen Kunststoffabfälle verschiedener Art an, die auf Deponien endgelagert werden. In industriellen Bereich fallen neben Verpackungsmaterialien auch Abfälle in Form von Zuschnitten, beispielsweise bei der Verarbeitung von Styroporplatten, an.

Die Kunststoffe weisen chemische Eigenschaften auf, die sie gegenüber den natürlichen Umweltbedingungen unempfindlich machen. Die Kunststoffe sind insbesondere nicht wasserlöslich, werden durch Luftsauerstoff nicht angegriffen und werden außerdem durch die im Erdreich vorhandenen Kleintiere oder Organismen nicht umgewandelt oder zerstört. Demzufolge stellen die großen Mengen an anfallenden Kunststoffen ein erhebliches Entsorgungsproblem dar, da sie, falls sie nicht mehr benötigt werden, also als Abfall zu betrachten sind, derart endgelagert werden müssen, daß sie dort ggf. über Jahrhunderte verbleiben können.

Da die meisten Kunststoffe auf Erdöl bzw. Erdölprodukten als Ausgangsstoffe beruhen, und die Erdölreserven in absehbarer Zeit erschöpft sein werden, wurden in letzter Zeit Bemühungen dahingehend getätigt, Kunststoffabfälle wieder zu verwerten.

Ein derartiges Wiederverwerten von Kunststoffabfällen, d.h., ein Rückführen der Materialien in einen Produktionsprozess, das sogenannte Recycling, wirft eine Reihe von technischen Problemen auf.

Es ist bekannt, Kunststoffabfälle, die beispielsweise bei der industriellen Verarbeitung, z.B. beim Blasformen, Spritzgießen oder dgl. anfallen, unmittelbar wieder den Ausgangsmaterialien zurückzuführen oder ggf. in ein verarbeitungsfähiges Granulat überzuführen, das dann wieder demselben Zweck, d.h. dem Blasformen oder Spritzgießen zugeführt wird.

Da die Kunststoffe für gewisse Anwendungsbereiche, beispeilswiese zur Herstellung von steifen, schlagfesten Behältern, wie Kraftstoffkanister, bestimmte Eigenschaften aufweisen müssen, können nur dafür geeignete Materialien, hergezogen werden. Kunststoffabfälle, die beispielsweise aus Folien oder relativ weichen Schaummaterialien bestehen, können nicht in einem Recyclingprozess ohne weiteres zur Herstellung von schalgfesten Behältern herangezogen werden.

Ein weiteres technisches Problem besteht darin, daß die im täglichen Bedarf anfallenden Kunststoffe, insbesondere wenn sie zur Verpackung von Lebensmitteln gedient haben, erheblich verschmutzt und mit weiteren Materialien, wie Etiketten aus Papier, Aluminiumfolien oder anderen Kunststoffen verbunden sind.

Kunststoffe auf Polystyrolbasis haben dabei eine breite Anwendung im täglichen Bedauf gefunden.

Unter Kunststoffen auf Polystyrolbasis werden solche verstanden, die aus reinem Polystyrol oder aus Pfropf- oder Copolymerisaten mit weiteren Kunststoffen, wie beispielsweise Butadien, Acrylnitril oder dgl. bestehen, die aber in ihrer chemischen Struktur gesehen im wesentlichen durch Styrol- bzw. Polystyroleinheiten bestimmt werden. Darunter sind auch solche Kunststoffe zu verstehen, die aus einem Gemisch verschiedener Materialien, wie Polystyrol, Farbpigmente, Weichmacher, oder bei geschäumten Kunststoffen, Treibmittel enthalten, deren chemischer Aufbau aber, wie zuvor, im wesentlichen durch Styrol- bzw. Polystyroleinheiten geprägt ist.

Polystyrol ist hinsichtlich des Einsatzes zur Verpackung von Lebensmittel unbedenklich und dient daher auf diesem Sektor nahezu ausschließlich als Verpackungsmaterial. So bestehen beispielsweise Joghurtbecher, Obstschalen, Getränkebecher oder Kunststoffteller ausschließlich aus Polystyrol.

Ferner hat Polystyrol aufgrund der Eigenschaft gut in geschäumte Materialien übergeführt werden zu können, eine breite Verwendung als Verpakkungsmaterial gefunden. Dabei wird es entweder als sogenanntes loose-fill-Material in Form von Schaumstoffkörperchen verwendet oder in Form von ggf. besonders geformten Schaumstoffblöcken.

Insbesondere als Copolymer mit Butadien und Acrylnitril, als sogenanntes schlagzähfestes Polystyrol, ist dieses in zahlreichen Haushaltsgeräten wie Schüsseln, Kunststofflöffeln oder dgl. im Einsatz. Außerdem besteht ein überwiegender Teil der Spielwaren aus Kunststoffen aus Polystyrol, da dieses, wie zuvor erwähnt, für die menschliche Gesundheit unbedenklich ist, so daß Kinder durch Lutschen oder ggf. Verschlucken solcher Kunststoffteile nicht gefährdet werden.

Bei der Wiederverwertung von Kunststoffabfällen der zuvor beschriebenen Art bestehen somit folgende grundsätzliche Probleme:

Die Kunststoffabfälle sollten in möglichst einheitlicher chemischer Zusammensetzung gesammelt bzw. isoliert werden, um dadurch ein Ausgangsmaterial für ein möglichst chemisch einheitliches Endprodukt zur Verfügung zu haben.

Dieses Problem kann bei Kunststoffen auf Polyäthylen oder Polypropylenbasis mittels fachgeschultem Personal durch manuelles Vorsortieren geschehen, da Polyethylene in ihrer chemischen Zusammensetzung kaum variieren und überwiegend als Homopolymerisat eingesetzt werden. Die Polyethylenkunststoffe bestehen dabei im wesentlichen entweder aus Hochdruck- oder Niederdruckpolyethylen, wobei diese sich im wesentlichen durch die Anzahl der Verzweigungen der Polyethylenkette unterscheiden. Diese Materialien finden dann auch grundsätzlich verschiedene Anwendungsgebiete, beispielsweise einerseits als Verpakkungsfolien, andererseits als schlagfeste Behälter, so daß deren Sortierung bei einem Wiederverwertungsprozess relativ einfach ist. Bei derartigen bekannten Verfahren werden Polystyrolabfälle, gleich welcher Zusammensetzung, aussortiert und den Deponien zugeführt, da diese Abfälle aufgrund ihrer schwankenden Zusammensetzung nicht mit vertretbarem technischen Aufwand in einzelne Fraktionen aufgeteilt werden können, die dann einzeln wieder in einen Herstellungsprozess für die ursprünglich vorgesehene Verwendung zugeführt werden.

Ein weiteres Problem ist das Abtrennen der Kunststoffe von an ihm haftenden Verschmutzungen oder anderen Materialien, wie Etiketten oder beispielsweise Metallfolien.

Dieses Problem kann zum Teil durch intensives Waschen der Kunststoffabfälle geschehen, die dann in Shreddern zerkleinert und anschließend in apparativ sehr aufwendigen Vorrichtungen, beispielsweise nach der Dichte getrennt werden. Dies kann beispielsweise in Zyklonen mit wässrigen Salzlösungen bestimmter Dichte geschehen, die so eingestellt ist, daß beispielsweise der gewünschte Kunststoff auf der Lösung schwimmt, die Weiteren Teile, Wie beispielsweise Metallteile oder andere Kunststoffe, jedoch absinken. Diese Trennverfahren sind jedoch sehr aufwendig und somit kostspielig.

Ein weiteres Problem ist die Zwischenlagerung der ggf. in besonderen Mülltonnen vorsortieren bzw. vorgesammelten Kunststoffe, wobei dies insbesondere bei polystyrolhaltigen Kunststoffen dahingehend problematisch ist, daß, wie zuvor erwähnt, dies hauptsächlich als Verpackungsmaterial in Form von Bechern, Schachteln oder Schaumstoffklötzen geschieht, die allesamt sehr voluminös oder sperrig sind.

Es ist zwar bekannt geworden, Kunststoffteile in sogenannten "grünen Tonnen" in Wohngebieten zentral zu sammeln. Die Kapazität derartiger Behälter ist aber beschränkt und diese müssen beim Sammeln von sperrigen Abfällen entweder mit aufwendigen Press- oder Stampfvorrichtungen versehen sein oder in kurzen Zeitabständen entleert werden. Da die Wirtschaftlichkeit eines solches Recycling-Verfahrens von der Menge an wiedergewonnenem Kunststoff abhängt, ist einleuchtend, daß bei sperrigen Abfällen, wie Bechern, Schaumstoffklötzen nur eine geringe Menge an Kunststoffmaterial pro gefüllte Mülltonneneinheit erhalten werden kann.

Ein bereits angedeutetes Problem bei Kunststoffabfällen auf Polystyrolbasis besteht darin, daß gerade durch die vielfältige Zusammensetzung der polystyrolhaltigen Kunststoffe diese nur dann wirtschaftlich in die ursprünglichen Produktionsprozesse wieder rückgeführt werden können, falls sehr große Mengen des jeweils speziellen Kunststoffes auf Polystyrolbasis anfallen.

Das bedeutet beispielsweise, daß Joghurtbecher, die eine bestimmte Festigkeit und Zähigkeit aufweisen müssen, ohne dabei gleichzeitig spröde zu sein, damit sie nicht brechen oder splittern, nur aus solchen Abfallmaterialien wieder hergestellt werden können, die diese bestimmte Eigenschaften aufweisen. Würden solche Becher beispielsweise mit Schaumstoffabfällen vermischt werden, die im wesentlichen aus reinem Polystyrol bestehen, würde der daraus resultierende Kunststoff nach einem Recyclingprozess weder zur Herstellung von Bechern noch zur Herstellung von Schaumstoffen geeignet sein. Diese an für sich relativ einfach mögliche Trennung nach visuellen Merkmalen, beispielsweise Schaumstoff einerseits, Lebensmittelgefäß andererseits, wurde aber dann zu einem aufwendigen Stauraumangebot führen, das die Wirtschaftlichkeit des gesamten Recycling-Verfahrens in Frage stellen würde.

Aufgabe der vorliegenden Erfindung ist daher, ein einfaches, somit wirtschaftliches Aufarbeiten von Kunststoffabfällen auf Polystyrolbasis zu schaffen. Dabei ist insbesondere zu verstehen, daß diese Maßnahmen raumsparend durchgeführt werden können.

Erfindungsgemäß wird die Aufgabe durch ein Verfahren gelöst, bei dem Abfälle auf Polystyrolbasis gesammelt werden, die Kunststoffabfälle auf Polystyrolbasis mit einem Lösungsmittel behandelt werden, in dem diese Kunststoffabfälle lösbar sind, die so erhaltene Lösung von verbleibenden Rückständen abgetrennt wird, und die abgetrennte Lösung als Klebemittel verwendet wird.

Schaumstoffe auf Polystyrolbasis, wie beispielsweise die zuvor erwähnten Verpackungsklötze, werden dabei unter einer erheblichen Volumenreduzierung in eine lagerfähige oder verarbeitungsfähige Form übergeführt. Dabei ist es beispielsweise möglich, ein Kubikmeter derartigen Verpackungsmaterials in etwa 10 Liter Lösung überzuführen, d.h. eine Volumenreduktion auf ein Prozent des Ausgangsvolumens durchzuführen. Gleichermaßen können Behälter, wie Becher, Schalen, Schüsseln oder Teller unter erheblicher Volumenverminderung in die Lösung übergeführt werden. Dies gilt auch für an sich kompaktere Materialien, jedoch mit sperriger Form, wie beispielsweise Spritzgußabfälle, insbesondere solche entlang von den Rillen der Formgußhälften oder auch bei Spielzeugabfällen, wie Spielzeugfiguren oder Bausteinen oder dgl.. Dadurch ist es auch wirtschaftlich vertretbar möglich, an bestimmten Sammelstellen polystyrolhaltige Kunststoffabfälle in verschiedenen Fraktionen getrennt zu sammeln und in Lösungen überzuführen, d.h., beispielsweise schlagzähfestes Polystyrol neben schaumstofförmigem Styrol oder sprödem Styrol zu sammeln. An den Sammelstellen werden die Abfälle in Gefäße, die dann ggf. mit Rührwerken oder dgl. versehen sind, gegeben und an Ort und Stelle in eine Lösung übergeführt. Dadurch ist es möglich, bei einem bestimmten Stauvolumen bzw. bestimmter Größe der Sammelvorrichtung, eine sehr große Gewichtsmenge an polystyrolhaltigen Kunststoffabfällen zu sammeln. Die entstandenen Lösungen können dann über Sammelfahrzeuge von Zeit zu Zeit abgepumpt werden und durch neues Lösungsmittel ersetzt werden.

Kunststoffabfälle verschiedener chemischer Zusammensetzung werden durch manuelles Vorsortieren nach visuell erkennbaren Merkmalen in Fraktionen an Kunststoffabfällen auf Polystyrolbasis und an Kunststoffabfällen anderer chemischer Zusammensetzung vorsortiert, und nach Behandeln der Fraktion und/oder Fraktionen an Kunststoffen auf Polystyrolbasis mit dem Lösungsmittel, die Lösung von verbleibenden Rückständen abgetrennt wird.

Dies hat den Vorteil, daß an einer zentralen Stelle verschiedene Kunststoffabfälle gesammelt werden können, wobei nicht polystyrolhaltige Abfälle getrennt gesammelt und an sich bekannten Aufbereitungsschritten zugeführt werden können. Die gelösten polystyrolhaltigen Abfälle können von nicht in dem Lösungsmittel lösbaren Rückständen abgetrennt werden. Dies ist beispielsweise bei Joghurtbechern vorteilhaft, die mit einer Aluminiumfolie verschlossen sind. Diese Aluminiumfolie bleibt meistens beim Öffnen der Becher am Rand über eine Verbindung, meist eine Klebstelle, hängen. Diese Verbindung zwischen Aluminiumfolie und Joghurtbecher wird dann beim Behandeln gemäß dem erfindungsgemäßen Verfahren getrennt, wobei das Metall als unlösbarer Rückstand zurückbleibt, wohingegen der Kunststoff in Lösung übergeführt wird. Beim Abpumpen der Lösung werden dann durch bekannte Mittel wie Filtersiebe derartige Rückstände zurückbehalten. Derartige Container müssen dann von Zeit zu Zeit von diesen festen Rückstandsstoffen befreit werden, falls diese eine gewisse Menge überschreiten.

In einer bevorzugten Ausgestaltung des Verfahrens werden die Kunststoffabfälle auf Polystyrolbasis nach der Farbe sortiert, und die jeweils gleichfarbigen Abfälle in eine getrennte Lösung übergeführt.

Dies hat den Vorteil, daß die Kunststoffe unter Beibehaltung ihrer ursprünglichen Farbe in Lösung übergeführt werden und dann als farbiges Produkt weiter verarbeitet werden können.

In einer bevorzugten Ausgestaltung des Verfahrens wird ein Lösungsmittel eingesetzt, das ausgewählt aus der Gruppe, bestehend aus Estern, Ketonen, aromatischen Kohlenwasserstoffen und chlorierten Kohlenwasserstoffen ist, oder es wird eine Mischung solcher Lösungsmittel eingesetzt.

Dies hat den Vorteil, daß aufgrund der guten Löslichkeit von Polystyrol in diesen Lösungsmittel rasch eine große Menge in Lösung übergeführt werden kann. Das bedeutet auch, daß bei stoßweisem Anfallen von Kunststoffmaterialien bestimmter Zusammensetzung, diese unmittelbar in Lösung übergeführt werden können.

In den meisten dieser Lösungsmitteln sind andere Kunststoffe, z.B. auf Polyethylen- oder Polypropylenbasis nicht lösbar, so daß diese anderen Kunststoffe, die versehentlich oder aufgrund von Nichtunterscheidbarkeit zu den gesammelten Polystyrolabfällen gelangt sind, nicht in Lösung übergeführt werden. Außerdem lösen sich in derartigen Lösungsmittel weder Metalle noch Papier oder Holzgrundstoffe, so daß es möglich ist, Verbundmaterialien aus solchen Stoffen, d.h. beispielsweise Metalle, die mit Kunststoffen beschichtet sind oder Polystyrolschaumhaltige Dämmaterialien, die mit einer Metall-oder Asbestträgerfolie versehen sind, oder Kunststoffe auf Polystyrolbasis und andere Kunststoffe, voneinander zu trennen.

In einer besonderen Ausgestaltung des Verfahrens wird als Ester Essigsäureethylester und/oder Essigsäuremethylester eingesetzt. Dabei wird zweckmäßiger Weise eine Mischung aus 85 % Essigsäure Ethylester und 15 % Essigmethylester eingesetzt.

Dies hat den Vorteil, daß bei einer guten Löslichkeit ein umweltneutrales Lösungsmittel eingesetzt wird, das auch für die mit der Verarbeitung beschäftigten Personen wenig geruchsbelästigend ist.

In weiteren Ausgestaltungen werden als Keton Aceton, als aromatische Kohlenwasserstoffe Benzol

und/oder Toluol und/oder Xylole, und als chlorierte Kohlenwasserstoffe Methylenchlorid und/oder Trichlorethylen eingesetzt.

Dies hat den Vorteil, daß besonders rasch beim Behandeln der Kunststoffabfälle auf Polystyrolbasis mit diesen Lösungsmitteln diese in die erfindungsgemäße Lösung übergeführt werden, wobei gleichzeitig wirtschaftliche Lösungsmittel mit relativ niederem Siedepunkt eingesetzt werden, die ggf. einfach rückgewonnen werden können.

Besonders vorteilhaft wird das Verfahren derart durchgeführt, daß die erhaltene Lösung einen Kunststoffanteil von 5 bis 75 Gew.%, bezogen auf das Gesamtgewicht der Lösung, aufweist.

Im Rahmen der gestellten Aufgabe besteht eine Verwendung der nach dem erfindungsgemäßen Verfahren hergestellten Lösungen darin, daß diese als Klebemittel verwendet werden. Dies beruht auf der überraschenden Feststellung, daß diese Lösungen hervorragende Klebeeigenschaften zum Verkleben verschiedenartigster Materialien aufweisen. So können beispielsweise mit derartigen Lösungen Papier, Schaumstoffisolierungen für Heizrohre untereinander und mit Heizrohren verklebt werden, ferner können Kunststoffmodellbausätze mit Hilfe solcher Klebemittel zusammengesetzt werden. Außerdem ist es möglich, Stein auf Stein, Stein auf Holz, Holz auf Holz, Holz auf Kunststoffe, Holz auf Keramikfliesen, Kork auf Kork, Kork auf Holz, Leder auf Leder, Leder auf Holz zu kleben. Des weiteren können Keramikteile gleicher Art, wie beispielsweise bei zerbrochenen Blumentöpfen oder Geschirrteilen geklebt werden. Ferner können auch Keramikfliesen auf andersartige Fliesen, Boden- und Wandfliesen auf Stein oder auch verschiedene Kunststoffe untereinander verklebt werden. Weiterhin ist es auch möglich, Metallteile, wie Eisen, auf Eisen miteinander zu verkleben. Diese beispielhafte Aufzählung erläutert die breite Einsatzmöglichkeit als Alleskleber.

Klebeeigenschaften weisen Lösungen aller Kunststoffabfälle auf Polystyrolbasis auf. Dabei können auch Lösungen verwendet werden, die aus Mischungen verschiedener Kunststoffabfälle auf Polystyrolbasis bestehen. Es muß also nicht darauf geachtet werden, daß nur Abfälle auf Polystyrolbasis bestimmter Zusammensetzung gelöst werden. Anders ausgedrückt, es können in eine solche Lösung beispielsweise Spielzeugabfälle oder Getränkebecher und gleichzeitig Schaumstoffteile gelöst werden, wobei dann die Gesamtlösung ebenfalls hervorragende Klebeeigenschaften aufweist. Durch Variation des erfindungsgemäßen Verfahrens können Klebemittel verschiedenen Kunststoffgehalts hergestellt werden, wobei beispielsweise Klebemittel mit relativ geringem Kunststoffanteil zum Verkleben von Papierbögen oder Teppichen verwendet werden können, andererseits Klebemittel mit hohem Kunststoffanteil zur Verbindung von Kunststoffteilen miteinander.

Eine besonders vorteilhafte Verwendung als Klebemittel zum Kleben von farbigen Kunststoffteilen besteht darin, solche Lösungen zu verwenden, die nach derjenigen Variante des erfindungsgemäßen Verfahrens hergestellt wurden, die die entsprechend farbigen Lösungen ergaben. So ist es beispielsweise beim Modellbau möglich, da in Modellbaukästen die Einzelteile über Kunststoffstränge aneinander hängen, nach Abtrennen der zu verbauenden Kunststoffteile von diesen Haltesträngen, die ja aus dem Material gleicher Farbe bestehen, die Stränge in einem der zuvor genannten Lösungsmittel zu lösen. Dies hat den Vorteil, daß einerseits beim Verkleben dieser Kunststoffteile ein Klebemittel verwendet wird, das zum einen dasselbe Material enthält, wie das, das verklebt werden soll und andererseits auch noch die selbe Farbe besitzt. Dadurch wird einerseits eine feste und auch optisch ansprechende Klebeverbindung geschaffen, die nicht nachträglich noch mit einer Farbe versehen Werden muß.

Bei der Verwendung der nach dem erfindungsgemäßen Verfahren hergestellten Lösung als Klebemittel werden die Kunststoffabfälle einer anderen als ihre ursprünglichen Verwendung zugeführt, und dabei insbesondere in eine auf Dauer angelegte Benutzungsform übergeführt, so daß bei dieser Wiederverwertung nicht nur ein Rückführen in einen Produktionsprozess stattfindet, sondern in einen Prozesszweig eingeführt wird, der nicht alsbald zu einem neuen Abfallprodukt führt.

Im Rahmen der gestellten Aufgabe besteht eine weitere erfindungsgemäße Verwendung, der nach dem erfindungsgemäßen Verfahren hergestellten Lösung darin, diese zur Herstellung von Kunststoffgranulat unter Entfernen des Lösungsmittels durch Destillation, Verdampfen, Vakuumverdampfen oder dgl. und Extrudieren des dadurch erhaltenen Kunststoffrückstandes zu verwenden. Das dadurch erhaltene Kunststoffgranulat kann dann je nach dessen Beschaffenheit weiter verwendet werden oder einer Entlagerung zugeführt werden. Ist die Lösung aus einheitlichen Kunststoffabfällen auf Polystyrolbasis hergestellt worden, beispielsweise aus einheitlichem schlagzähfesten Polystyrol, so kann dieses Granulat Wiederum zur Herstellung von solchen Produkten verwendet werden.

Ist dies nicht der Fall oder nicht erwünscht, so kann das abgetrennte Lösungsmittel zum Durchführen des erfindungsgemäßen Verfahrens rückgeführt bzw. wieder verwendet werden und das erhaltene Granulat ggf. einer Endlagerung zurückzuführen werden. Dies wird dann durchgeführt, falls sehr voluminöse Kunststoffabfälle, wie Schaumstoffblöcke oder fliesartige Produkte in ein festes kompaktes endlagerfähiges Produkt übergeführt werden möchten. In diesem Fall ist dann beim erfindungsgemäßen Löseverfahren nicht notwendig, darauf zu achten, daß eine selektive Trennung der polystyrolhaltigen Kunststoffabfälle durchgeführt wird.

Die Erfindung wird nachfolgend anhand einiger ausgewählter Ausführungsbeispiele im Zusammenhang mit den beiliegenden Zeichnungen näher beschrieben und erläutert. Es zeigt:

Fig. 1 einen Schnitt einer Anordnung zum Prüfen der Klebeeigenschaften eines Ausführungsbeispiels eines Klebemittels,

Fig. 2 einen Schnitt einer zweiten Anordnung zur Prüfung von Klebeeigenschaften, und

Fig. 3 perspektivisch eine weitere Anordnung zur Prüfung der Klebeeigenschaften einer weiteren Ausführung eines erfindungsgemäßen Klebemittels.

### Beispiel 1

0.5 g an schaumstofförmigen Verpackungsmaterial, das im Handel unter dem geschützten Warenzeichen Styropor erhältlich ist, werden bei Raumtemperatur in 3,7 g einer Mischung aus 85 % Essigsäureethylester und 15 % Essigsäuremethylester durch kräftiges Umschütteln gelöst. Die daraus resultierende dünnflüssige Lösung weist einen Kunststoffanteil von etwa 12 Gew.-%, bezogen auf das Gesamtgewicht der Lösung auf.

### Beispiel 2

3.0 g Styroporabfall in Form eines Zuschnitts aus einer Styroporplatte, die zu Dämmzwecken verbaut wird, werden in 3,7 g einer Mischung aus 85 % Essigsäureethylester und 15 % Essigsäuremethylester durch mehrfaches Umschütteln gelöst, wobei der Styroporzuschnitt zuvor in kleinere Stükke zerteilt wird und diese nach und nach in die Lösung gegeben werden. Die daraus resultierende hoch viskose Lösung weist einen Kunststoffanteil von etwa 45 % auf.

### Beispiel 3

In 2,3 g einer Mischung aus 85 % Essigsäureethylester und 15 % Essigsäuremethylester wird bei Raumtemperatur ein 1,5 g schwerer, polystyrolhaltiger, roter Kunststoffspielzeugbaustein gelöst. Die daraus resultierende tiefrote Lösung weist einen Kunststoffanteil von etwa 40 % auf.

### Beispiel 4

In 2,3 g des Lösungsmittelgemisches von Beispiel 3 werden 6,0 g blaue polystyrolhaltige Spielzeugbausteine gelöst. Die daraus resultierende, hochviskose blaue Lösung weist einen Kunststoffanteil von etwa 73 % auf.

### Beispiel 5

In 3,7 g Aceton wird ein 0,5 g schwerer weißer polystyrolhaltiger Spielzeugbaustein gelöst. Die daraus resultierende nahezu farblose Lösung weist einen Kunststoffanteil von 12 % auf.

### Beispiel 6

In 3,7 g Aceton werden 3,0 g rote polystyrolhaltige Spielzeugbausteine gelöst. Die daraus resultierende, mittelviskose tiefrote Lösung weist einen Kunststoffanteil von 45 % auf.

### Beispiel 7

In den Lösungsmitteln von Beispiel 3 bis 6 werden anstatt Spielzeugbausteine polystyrolhaltige Spielzeugfiguren gleichen Gewichts oder polystyrolhaltige schwarze Kunststoffkleiderbügel gelöst.

### Beispiel 8

0,5 g polystyrolhaltige Spritzlingreste aus einem Modellbaukasten, die nach Abtrennen der zu verklebenden Modellbauteile übrig blieben, werden in 3,7 g des Lösungsmittelgemisches von Beispiel 1 durch Umschütteln gelöst. Die resultierende dünnflüssige Lösung weist einen Kunststoffanteil von etwa 12 % auf.

### Beispiel 9

3,4 g grüne Spritzlingreste entsprechend von Beispiel 8, werden in 3,7 g des Lösungsmittelgemisches von Beispiel 1 durch mehrfaches Umschütteln gelöst. Die daraus resultierende, hochviskose tiefgrüne Lösung weist einen Kunststoffanteil von etwa 48 % auf.

### Beispiel 10

Eine Kunststoffschachtel, bestehend aus einem grünen Bodenteil aus polystyrolhaltigem Kunststoff und einem durchsichtigen Deckelteil aus Polyethylen, wobei beide Teile mit bedruckten Papieraufkleber versehen sind, werden zerbrochen und die Bruchstücke in 50 ml des Lösungsmittelgemisches von Beispiel 1 gegeben und mehrfach umgeschüttelt. Nach wenigen Minuten haben sich die grünen Kunststoffteile auf Polystyrolbasis gelöst, die Papieretiketten sowie die Polyethylenteile schwimmen auf der Lösung. Die Mischung wird über ein grobmaschiges Filtersieb gegossen, wobei die flüssigen und festen Bestandteile voneinander getrennt werden.

Beispiel 11

Jeweils 2 cm³ der Lösungen von Beispiel 1 bis 10 werden miteinander vermischt. Die resultierende graubraune Lösung ist mittelviskos.

Beispiel 12

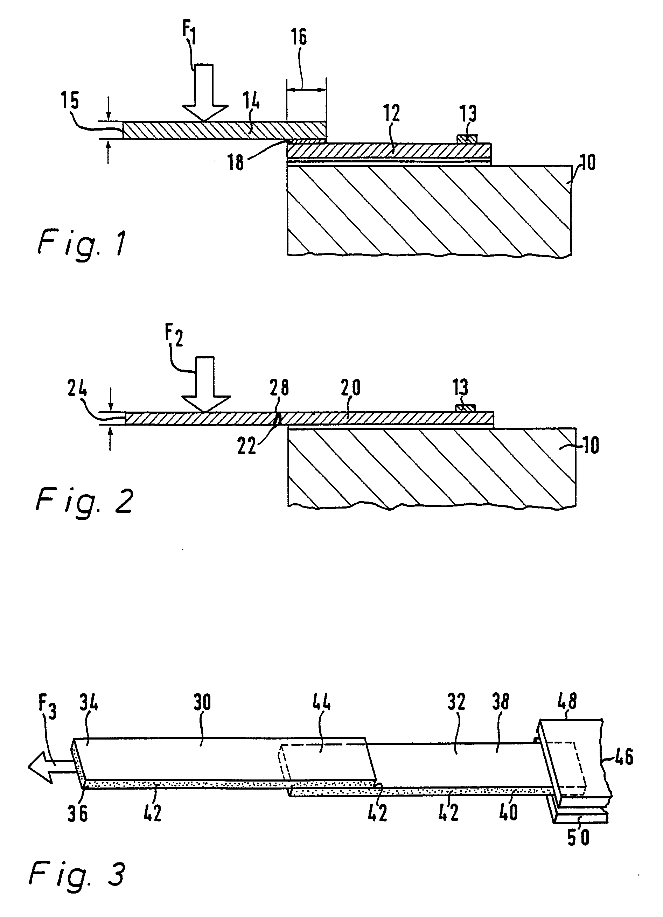

Zwei in Fig. 1 gezeigte Kanthölzer 12, 14 aus Weichholz mit 20 cm Länge und einem quadratischen Querschnitt von 1,4 x 1,4 cm werden über zwei endseitige Seitenflächen 16 auf eine Länge von 4 cm miteinander verklebt. Dazu wird an beiden Kanthölzern eine endseitige Seitenfläche mit dem Maß 4 x 1,4 cm mit der Lösung von Beispiel 3 bestrichen, aneinandergepreßt und etwa zwölf Stunden so gehalten. Die miteinander verklebten Kanthölzer 12 und 14 werden so auf eine Unterlage 10 gebracht, daß das Kantholz 12 auf der der Klebefläche 16 gegenüberliegenden Längsfläche vollstandig auf der Unterlage 10 liegt. Die Stirnseite des Kantholzes 12 im Bereich der Klebefläche 16 fluchtet dabei etwa mit der Kante der Unterlage 10. Das der Klebeverbindung 18 abgewandte Ende des Kantholzes 12 ist über eine Spannvorrichtung 13 fest an der Unterlage 10 gehalten.

Auf die obere Seitenfläche des Kantholzes 14 wird im Abstand von 8 cm von der frei auskragenden Stirnfläche 15 ein Gewicht von 5,5 kg gelegt. Die durch das Gewicht auf das Kantholz 14 ausgeübte Kraft $F_1$ wirkt im Abstand von etwa 8 cm von der Außenkante der Klebeverbindung 18. Die Klebeverbindung 18 war nach einer Dauerbelastung von 10 Stunden unverändert. Bei Erhöhung des Gewichtes auf etwa 10 kg erfolgte ein Bruch des Kantholzes 14 im Bereich zwischen Gewicht und Klebeverbindung, die Klebeverbindung 18 selbst blieb aber erhalten.

Das zuvor beschriebene Beispiel wird mit Kanthölzern 12, 14 gleicher Ausmaße, jedoch aus Hartholz, wiederholt, und die Trocknung der Klebefläche 16 bei etwa 120° C durchgeführt. Die verklebten Kanthölzer 12, 14 hielten dann auch einer Belastung von 10 kg stand.

Beispiel 13

Eine in Fig. 2 gezeigte Eternitplatte 20 von 35 cm Länge, 12 cm Breite und 1 cm Dicke wurde breitseits durchgebrochen. Die dadurch entstehende Bruchstelle 22 wurde mit der Mischungslösung von Beispiel 11 geklebt. Dazu werden die Bruchkanten mit dieser Lösung bestrichen und die beiden Teile unter Druck aneinander gestoßen und so zwölf Stunden gehalten. Die verklebte Eternitplatte 20 wird derart auf die Unterlage 10 gelegt, daß die Klebeverbindung 28 außerhalb der Außenkante der Unterlage zum Liegen kommt, d.h. also im frei ausragenden Teil der Eternitplatte angeordnet ist. Die Eternitplatte 10 wird am auf der Unterlage 10 liegenden Ende mit einer Spannvorrichtung 13 fest gehalten.

Auf die Eternitplatte 20 wird im Abstand von etwa 8 cm von der frei ausragenden Stirnseite 24, etwa mittig von den beiden Seitenkanten aus gesehen, ein Gewicht von 10 kg aufgelegt. Die durch das Gewicht ausgeübte Kraft $F_2$ wirkt etwa 10 cm von der Klebeverbindung 28 entfernt auf die Eternitplatte 20. Die Eternitplatte bricht bei dieser Belastung nicht und die Klebeverbindung ist auch nach mehrtägiger Belastung unverändert.

Bei Erhöhung der Belastung bricht die Eternitplatte im Bereich zwischen wirkender Kraft $F_2$ und Klebeverbindung 28, die Klebeverbindung selbst bleibt aber unversehrt.

Beispiel 14

Zwei in Fig. 3 gezeigte Streifen 30 und 32 mit einer Länge von 7 cm und einer Breite von 2 cm werden endseitig über eine Länge von 2 cm miteinander verklebt. Die dadurch entstandene Klebefläche 44 ist etwa 4 cm², als Klebemittel wird die Lösung von Beispiel 6 verwendet.

Der Streifen 30 besteht dabei aus einem ersten und einem zweiten Folienstreifen 34 bzw. 36, aus durchsichtigem Polyestermaterial, die jeweils eine Dicke von etwa 0,5 mm aufweisen. Die beiden Folienstreifen 34 und 36 wurden ganzflächig mittels der Lösung von Beispiel 6 miteinander verklebt.

Der Streifen 32 besteht gleichermaßen aus zwei deckungsgleich aufeinandergeklebten Folienstreifen 38 bzw. 40, die ebenfalls mittels der Lösung von Beispiel 6 miteinander verklebt wurden.

Der Streifen 38 ist endseitig zwischen zwei Backen 48, 50 einer Spannvorrichtung 46 geklemmt gehalten.

Am frei ausragenden Ende des Streifens 30 wird eine Zugkraft $F_3$ angelegt, die einem Gewicht von 75 kg entspricht.

Die Klebeverbindung 42 bleibt bei dieser Zug-Scher-Beanspruchung auch nach mehreren Stunden unverändert. Auch ein wiederholtes Anlegen dieser Kraft führt keine Veränderung der Klebeverbindung herbei.

Bei einem weiteren Versuch wurde die Anordnung von Fig. 3 an der Stirnseite des frei ausragenden Endes des Streifens 30 mit einem Kraftfahrzeug von 1,1 t Gewicht in Verbindung gebracht, das durch Ziehen mittels der Spannvorrichtung 46 über die Streifen 30 bzw. 32 auf ebener Straße mehrere Meter weit bewegt wurde.

Bei Vorversuchen zu diesem Beispiel wurden lediglich zwei Folienstreifen 36 bzw 38 über die Klebefläche 44 miteinander verklebt und dann die zuvor beschriebenen Zugversuche durchgeführt. Dabei riß der Folienstreifen 34 zwischen Klebeverbindung 42 und Angriffspunkt der Kraft F₃, die Klebeverbindung 42 selbst blieb unversehrt.

### Beispiel 15

Ein Teppichboden von etwa 20 m² Fläche, dessen Unterseite mit einer Schaumstoffunterlage versehen ist, wird flächig mit der Lösung von Beispiel 1 bestrichen und auf einen Sandsteinboden geklebt. Der Teppichboden weist eine sehr gute Haltbarkeit auf diesem Untergrund auf, er kann beim Ablösen mühelos abgezogen werden, wobei Teile der Schaumstoffunterlage auf dem Sandsteinboden zurückbleiben. Die verbleibenden Schaumstoffklebereste auf dem Sandsteinboden können einfach mit einer Spachtel entfernt werden.

### Beispiel 16

Polystyrolhaltige Rückleuchtenabdeckungen von Kraftfahrzeugen verschiedener Hersteller werden in Methylenchlorid gelöst. Die resultierenden Lösungen werden in Glasgefäßen gegossen. Das Methylenchlorid wird durch Erwärmen abgedampft. Nach Abkühlen wird ein fester, kompakter Rückstand erhalten, der vom Glasgefäß leicht ablösbar ist.

### Beispiel 17

Ein etwa 8 cm breiter und etwa 30 cm langer Dachziegel (eine sog. Frankfurterpfanne) wurde mittig längs der Breite gebrochen und auf Stroß geklebt. Dazu werden die Bruchkanten mit einer schwarzen Lösung eines Kunststoffkleiderbügels (entsprechend Beispiel 7) entsprechend der Zusammensetzung von Beispiel 3 bestrichen und die Bruchstücke unter Druck zwölf Stunden gepreßt bei Raumtemperatur gehalten. Ein so geklebter Dachziegel wurde auf ein Dach gelegt und den Umwelteinflüssen ausgesetzt. Die Klebestelle ist nach mehreren Monaten unverändert, d.h. auch wasserdicht. Während dieser Zeitspanne erfolgten Temperaturschwankungen von etwa + 25°C bei intensiver Sonneneinstrahlung bis etwa -5°C bei Frostnächten.

## Ansprüche

1. Verfahren zur Aufarbeitung von Kunststoffabfällen, bei dem
   a) Abfälle auf Polystyrolbasis gesammelt werden,
   b) die Kunststoffabfälle auf Polystyrolbasis mit einem Lösungsmittel behandelt werden, in dem diese Kunststoffabfälle lösbar sind,
   c) die so erhaltene Lösung von verbleibenden Rückständen abgetrennt wird, und
   d) die abgetrennte Lösung als Klebemittel verwendet wird.

2. Verfahren nach Anspruch 1, dadurch gekennzeichnet, daß die Kunststoffabfälle auf Polystyrolbasis nach der Farbe sortiert werden, und daß die jeweils gleichfarbigen Abfälle in eine getrennte Lösung übergeführt werden.

3. Verfahren nach Anspruch 1 oder 2, dadurch gekennzeichnet, daß Kunststoffabfälle auf nicht Polystyrolbasis, insbesondere auf Polyethylenbasis und Kunststoffabfälle auf Polystyrolbasis zusammen sortiert werden, daß in Schritt b) die Kunststoffabfälle mit einem für Polystyrol selektiven Lösungsmittel gelöst werden, und daß in Schritt c) die Lösung von den ungelösten Kunststoffabfällen abgetrennt wird.

4. Verfahren nach einem oder mehreren der Ansprüche 1 bis 3, dadurch gekennzeichnet, daß ein Lösungsmittel, ausgewahlt aus der Gruppe, bestehend aus Estern, Ketonen, aromatischen Kohlenwasserstoffen und chlorierten Kohlenwasserstoffen oder eine Mischung solcher Lösungsmittel eingesetzt wird.

5. Verfahren nach Anspruch 4, dadurch gekennzeichnet, daß als Ester Essigsäureethylester und/oder Essigsäuremethylester eingesetzt wird.

6. Verfahren nach Anspruch 5, dadurch gekennzeichnet, daß eine Mischung aus 85 Vol.-% Essigsäureethylester und 15 Vol.-% Essigsäuremethylester eingesetzt wird.

7. Verfahren nach einem oder mehreren der Ansprüche 4 bis 6, dadurch gekennzeichnet, daß als Keton Aceton eingesetzt wird.

8. Verfahren nach Anspruch 4 oder einem oder mehreren der folgenden, dadurch gekennzeichnet, daß als aromatische Kohlenwasserstoffe Benzol, und/oder Toluol und/oder Xylole eingesetzt werden.

9. Verfahren nach Anspruch 4 oder einem oder mehreren nachfolgenden Ansprüche, dadurch gekennzeichnet, daß als chlorierte Kohlenwasserstoffe Methylenchlorid und/oder Trichlorethylen eingesetzt werden.

10. Verfahren nach einem oder mehreren der Ansprüche 1 bis 9, dadurch gekennzeichnet, daß die Lösung einen Kunststoffanteil von 5 bis 75 Gew.-% , bezogen auf das Gesamtgewicht der Lösung aufweist.

11. Verfahren zur Aufarbeitung von Kunststoffabfällen, bei dem

a) Abfälle auf Polystyrolbasis gesammelt werden,

b) die Fraktionen an Kunststoffabfällen auf Polystyrolbasis mit einem Lösungsmittel behandelt werden, in dem diese Kunststoffabfälle lösbar sind

c) daß die so erhaltene Lösung von verbleibenden Rückständen abgetrennt wird, aus dieser Lösung das Lösungsmittel durch Destillation, Verdampfen, Vakuumverdampfen entfernt wird und der verbliebene feste Rückstand einer Wiederverwertung zugeführt wird.

Fig. 1

Fig. 2

Fig. 3